# EUROPÄISCHE PATENTSCHRIFT

(11) **EP 2 612 746 B1**
(45) Veröffentlichungstag und Bekanntmachung des Hinweises auf die Patenterteilung: **01.07.2015**
(21) Anmeldenummer: 12196524.8
(22) Anmeldetag: 11.12.2012
(51) Int. Cl.: B29C 67/00

(54) **Vorrichtung zur schichtweisen Herstellung von dreidimensionalen Objekten mittels rotierendem Auftrag**
Device for the layered production of three-dimensional objects by means of rotating application
Dispositif de fabrication en couche d'objets tridimensionnels au moyen d'une application rotative

(30) Priorität: 06.01.2012 DE 102012200160
(43) Veröffentlichungstag der Anmeldung: 10.07.2013
(73) Patentinhaber: Evonik Industries AG, 45128 Essen (DE)
(72) Erfinder: Grebe, Maik, 44805 Bochum (DE); Diekmann, Wolfgang, 45731 Waltrop (DE); Hessel-Geldmann, Sigrid, 45721 Haltern am See (DE)

(56) Entgegenhaltungen:
- EP-A1- 1 234 625
- EP-A2- 0 712 050
- WO-A1-93/08928

## Beschreibung

Die vorliegende Erfindung betrifft eine Vorrichtung zur schichtweisen Herstellung von dreidimensionalen Objekten, Verfahren zur schichtweisen Herstellung sowie entsprechende Formkörper.

Die zügige Bereitstellung von Prototypen ist eine in der jüngsten Zeit häufig gestellte Aufgabe. Verfahren die dies ermöglichen werden Rapid Prototyping/ Rapid Manufacturing oder auch Additive Fabrication-Verfahren genannt. Besonders geeignet sind Verfahren, die auf der Basis von pulverförmigen Werkstoffen arbeiten, und bei denen schichtweise durch selektives Aufschmelzen und Verfestigen die gewünschten Strukturen hergestellt werden. Auf Stützkonstruktionen bei Überhängen und Hinterschnitten kann dabei verzichtet werden, da die die aufgeschmolzenen Bereiche umgebende Baufeldebene ausreichende Stützwirkung bietet. Ebenso entfällt die Nacharbeit, Stützen zu entfernen. Die Verfahren sind auch für die Herstellung von Kleinserien geeignet. Die Bauraumtemperatur wird so gewählt, dass es während des Bauprozesses zu keinem Verzug der schichtweise hergestellten Strukturen kommt.

Ein Verfahren, welches besonders gut für den Zweck des Rapid Prototypings geeignet ist, ist das selektive Laser-Sintern (SLS). Bei diesem Verfahren werden Kunststoffpulver in einer Kammer selektiv kurz mit einem Laserstrahl belichtet, wodurch die Pulver-Partikel, die von dem Laserstrahl getroffen werden, schmelzen. Die geschmolzenen Partikel laufen ineinander und erstarren schnell wieder zu einer festen Masse. Durch wiederholtes Belichten von immer neu aufgebrachten Schichten können mit diesem Verfahren dreidimensionale Körper einfach und schnell hergestellt werden.

Das Verfahren des Laser-Sinterns (Rapid Prototyping) zur Darstellung von Formkörpern aus pulverförmigen Polymeren wird ausführlich in der Patentschriften US 6,136,948 und WO 96/06881 (beide DTM Corporation) beschrieben. Eine Vielzahl von Polymeren und Copolymeren wird für diese Anwendung beansprucht, wie z.B. Polyacetat, Polypropylen, Polyethylen, lonomere und Polyamid. WO 93/08928 beschreibt ebenfalls ein Lasersinterverfahren. EP 1234625 beschreibt ein Laserschmelzverfahren mit einer Auftragseinrichtung und einer Nivelliereinrichtung.

Andere gut geeignete Verfahren sind das SIV-Verfahren (Selektive Verbindungsinhibition) wie in WO 01/38061 beschrieben, oder ein Verfahren wie in EP 1015214 beschrieben. Beide Verfahren arbeiten mit einer flächigen Infrarotheizung zum Aufschmelzen des Pulvers. Die Selektivität des Aufschmelzens wird bei ersterem durch die Auftragung eines Inhibitors, beim zweiten Verfahren durch eine Maske erreicht. Ein weiteres Verfahren ist in DE 10311438 beschrieben. Bei diesem wird die zum Verschmelzen benötigte Energie durch einen Mikrowellengenerator eingebracht, wobei die Selektivität durch Auftragen eines Suszeptors erreicht wird. Ein weiteres Verfahren wird in WO 2005/105412 beschrieben, bei dem die zum Verschmelzen benötigte Energie durch elektromagnetische Strahlung eingebracht wird, wobei ebenfalls wieder die Selektivität durch Auftragen eines Absorbers erreicht wird.

Ein Problem bei den aus dem Stand der Technik bekannten Verfahren ist, dass die eingesetzten Pulver fließfähig sein müssen, damit ein einwandfreier Schichtauftrag gelingen kann. Nur bei einem einwandfreien Schichtauftrag können dreidimensionale Objekte von hoher Qualität hergestellt werden. Bei nicht ausreichender Fließfähigkeit werden Bereiche des Baufeldes nicht oder nur unzureichend mit Pulver beschichtet. Zudem können Riefen, Wellen oder Risse im Pulver der Baufeldebene auftreten. Dieses führt im Prozess zu Problemen, so dass am Ende des Prozesses die hergestellten dreidimensionalen Objekte Defekte aufweisen. Insbesondere der Pulverauftrag mittels einer rotierenden Rolle ist problematisch, da im Falle von nicht fließfähigen Pulvern diese an der Rolle haften und den Pulverauftrag behindern.

So wird in z. B. in EP 1443073 beschrieben, die Fließfähigkeit der eingesetzten Pulver durch die Zugabe von Additiven zu verbessern. Nachteil dieser Vorgehensweise ist, dass die zugegebenen Additive dann auch Bestandteil in den hergestellten dreidimensionalen Objekten sind, was in manchen Anwendungsfällen für diese Objekte unerwünscht sein kann. Zudem erhöht die Zugabe von Additiven zur Steigerung der Fließfähigkeit meist auch den Verzug der hergestellten dreidimensionalen Objekte. Sehr feine Pulver lassen sich zudem auch mit der Zugabe von Additiven nicht oder nur bedingt fließfähig machen.

Aufgabe der vorliegenden Erfindung ist daher die Bereitstellung einer Vorrichtung und Verfahren die die Nachteile des Standes der Technik nicht mehr aufweisen, und damit die Verbesserung des Auftrags von schlecht fließfähigen Pulvern bei der Herstellung von dreidimensionalen Objekten ermöglichen.

Die genannte Aufgabe wird durch eine Vorrichtung, einem Verfahren und Verwendungen gemäß der vorliegenden Ansprüchen gelöst.

Ein Gegenstand der vorliegenden Erfindung ist eine Vorrichtung zur schichtweisen Herstellung von dreidimensionalen Objekten (Formkörpern) umfassend einen Bauraum (10) mit einer höheneinstellbaren Bauplattform (6), einer Aufbringvorrichtung (7') zum Aufbringen einer Schicht eines durch Einwirkung elektromagnetischer Strahlung verfestigbaren Materials auf die Bauplattform (6), einer Bestrahlungseinrichtung umfassend eine elektromagnetische Strahlung emittierende Strahlungsquelle (1), eine Steuerungseinheit (3) und eine im Strahlengang der elektromagnetischen Strahlung befindliche Linse (8), zum Bestrahlen von dem Objekt (5) entsprechenden Stellen der Schicht, wobei die Aufbringvorrichtung (7') zum Aufbringen einer Schicht in Form eines rotierenden Zylinders ausgebildet ist, der mit einem Bürstenbesatz (15) versehen ist. Hierdurch entsteht eine Art Rundbürste. Der Bürstenbesatz (15) wird vorzugsweise ausgewählt aus der Gruppe der Naturfasern, der synthetischen Fasern, der Kunstborsten, die schleifmitteldurchsetzt sein können, der Metalldrähte sowie Mischungen daraus, wobei Metalldrähte bevorzugt sind.

Aufbringvorrichtungen (7) und (7') (raue Oberfläche und Bürstenbesatz) können miteinander kombiniert werden.

Für eine Anwendung in einem Schichtverfahren sind Pulver mit einer Rieselzeit von über 35 s oder einer Einstufung als nicht fließfähig (gemessen nach DIN EN ISO 6186, Verfahren A, Durchflussdurchmesser 15 mm) bisher als nicht auftragbar angesehen worden. Mit der vorliegenden Erfindung ist es nunmehr möglich, derartige Pulver zu verarbeiten.

Der rotierende Zylinder (Rolle) als Aufbringvorrichtung (7) bzw. (7') dient somit dazu, das Pulver zu verteilen und je eine weitere Schicht des Pulvers aufzutragen. Hierbei erfolgt der Auftrag nicht durch Schieben (wie bei einer Rakel oder einem Besen), sondern durch Rotation des Zylinders. Vorzugsweise erfolgt der Auftrag nur mittels des rotierenden Zylinders und nicht mittels einer weiteren Rolle, einer zusätzlichen Rakel oder ähnlichem. Es ist somit nicht nötig, die Pulverschicht nach dem Auftrag durch den Zylinder durch eine weitere Aufbringvorrichtung zu glätten. Es ist somit bevorzugt, dass die Vorrichtung keine weitere Aufbringvorrichtung umfasst. Ein derartiges System wird vom Fachmann als "einteilig" bezeichnet.

Die Rakel ist insofern nachteilhaft, als schlecht riesel- oder fließfähige Pulver an der Rakel anhaften können.

Grundsätzlich kann der Metallzylinder mit der Auftragsrichtung oder entgegen der Auftragsrichtung rotieren, wobei ein Auftrag entgegen der Auftragsrichtung bevorzugt ist.

Die "entsprechenden Stellen" des Objekts stellen je eine Schicht der geslicten Kontur des Objekts dar, welche durch eine Ansteuerung des Laserstrahls schrittweise in das Pulverbett gesintert oder eingeschmolzen wird.

Es hat sich überraschend gezeigt, dass mit Vorrichtungen Verfahren und Verwendungen gemäß der vorliegenden Erfindung auch schlecht riesel- oder fließfähige Pulver aufgebracht werden können, so dass der Zusatz von Additiven verringert werden kann bzw. ganz darauf verzichtet werden kann. Dabei ist insbesondere überraschend, dass die genannte Aufgabe dadurch gelöst werden kann, dass eine Aufbringvorrichtung (7) und/oder eine Aufbringvorrichtung (7') eingesetzt wird, die in Form eines rotierenden Zylinders ausgeführt ist, wobei die Manteloberfläche des Zylinders eine Rauheit Rz von mindestens 100 µm (DIN EN ISO 4287:1998, ermittelt mittels Tastschnittverfahren nach DIN EN ISO 3274, Hommel Tester T1000 Wave von Jenoptik, Spitzenradius 5 µm, Kegelwinkel 90°), aufweist bzw. der Zylinder mit einem Bürstenbesatz (15) versehen ist.

Bevorzugt ist die Rauheit Rz der Manteloberfläche mindestens 175 µm. Besonders bevorzugt ist die Rauheit Rz der Manteloberfläche mindestens 250 µm, ganz besonders bevorzugt 250 µm bis 500 µm.

Der Zylinder und seine Oberfläche können aus beispielsweise aus Kunststoffen oder Metallen gefertigt sein. Die Manteloberfläche des Zylinders besteht oder enthält vorzugsweise Metall oder eine Metalllegierung.

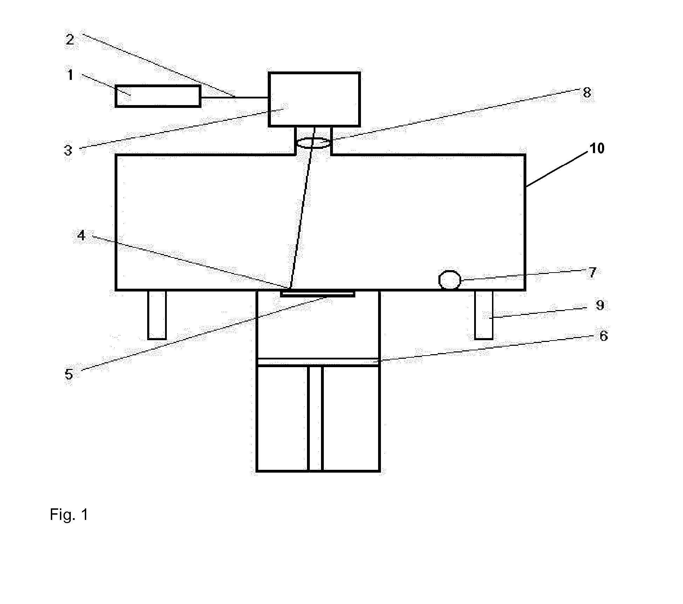

Fig. 1 zeigt den prinzipiellen Aufbau einer Vorrichtung zur Herstellung von dreidimensionalen Objekten gemäß der Verwendung nach Anspruch 11 der vorliegenden Erfindung. Das Bauteil wird zentral im Baufeld positioniert.

Aus einem Laser (1) wird der Laserstrahl (2) mittels eines Scansystems (3) durch die Linse (8) auf eine temperierte und inertisierte, vorzugsweise mit Stickstoff inertisierte, Pulveroberfläche (4) des zu bildenden Objekts (5) gelenkt. Die Linse hat dabei die Aufgabe, die restlichen optischen Komponenten wie z. B die Spiegel des Scanners von der Bauraumatmosphäre zu trennen. Oft wird die Linse als F-Theta Linsensystem ausgeführt, um einen möglichst homogenen Fokus über dem gesamten Arbeitsfeld zu gewährleisten. Innerhalb des Bauraums befindet sich die Aufbringvorrichtung (7) zum Aufbringen des zu verfestigenden Materials auf die Bauplattform (6), wobei die Aufbringvorrichtung in Form eines rotierenden Zylinders ausgebildet ist, dessen Manteloberfläche mindestens eine Rauheit Rz nach DIN EN ISO 4287:1998 von 100 µm hat.

Es ist weiterhin bevorzugt, dass die Vorrichtung ein Heizelement zur Temperierung des Bauraums aufweist. Damit kann der Bauraum beispielsweise auf die für die Herstellung des dreidimensionalen Objektes ideale Temperatur (Arbeitstemperatur) eingestellt werden.

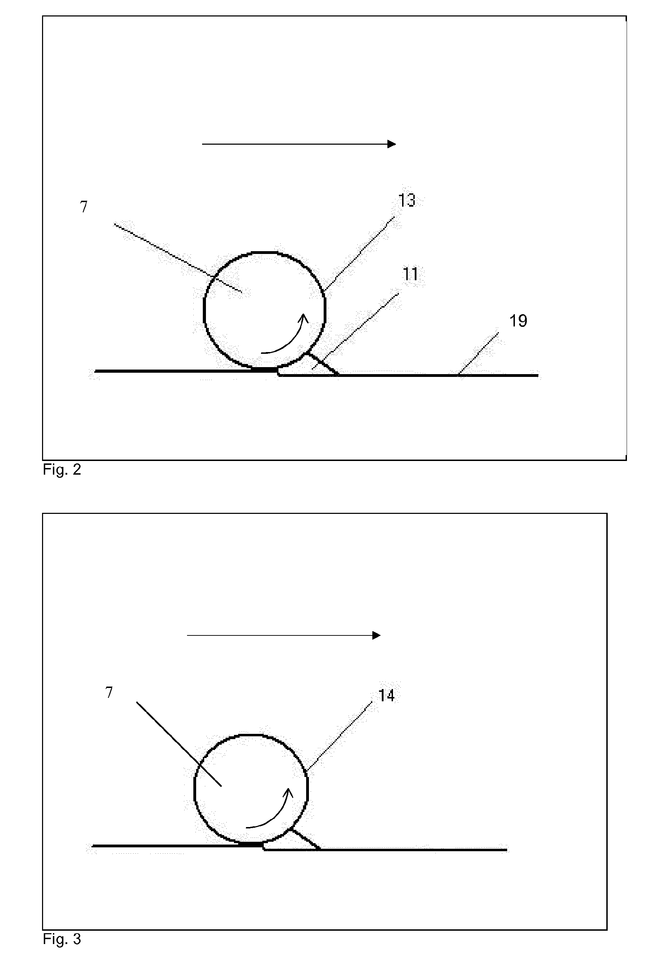

In Fig. 2 ist eine nicht erfindungsgemäße Aufbringvorrichtung dargestellt. Die Aufbringvorrichtung (7) ist in Form eines Metallzylinders ausgeführt, der entgegen der Auftragsrichtung rotiert und das Pulver (11) auf die Baufeldebene (19) aufträgt. Die Rauheit Rz (größte Höhe des Profils) nach DIN EN ISO 4287:1998 ermittelt mittels Tastschnittverfahren nach DIN EN ISO 3274 (Hommel Tester T1000 Wave von Jenoptik, Spitzenradius 5µm, Kegelwinkel 90°) der Mantelfläche (13) beträgt 64 µm.

In Fig. 3 ist eine Aufbringvorrichtung (7) wie in Anspruch 11 dargestellt. Die Aufbringvorrichtung (7) ist auch hier in Form eines Metallzylinders ausgeführt, der beim Pulverauftrag entgegen der Auftragsrichtung rotiert. Die Rauheit Rz nach DIN EN ISO 4287:1998 der Mantelfläche (14) beträgt hier 183 µm.

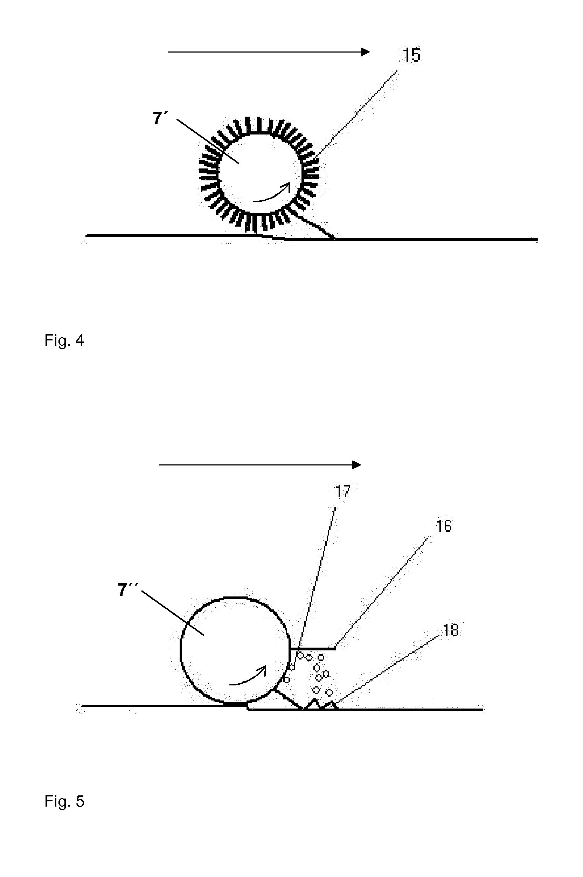

In Fig. 4 ist ein weitere erfindungsgemäße Aufbringvorrichtung dargestellt. Die Aufbringvorrichtung (7') ist auch hier in Form eines Metallzylinders ausgeführt, der beim Pulverauftrag entgegen der Auftragsrichtung rotiert. Die Mantelfläche ist hier mit gleichlangen Metalldrähten als Bürstenbesatz (15) bestückt. Grundsätzlich kann der Bürstenbesatz unterschiedlich lang sein, es ist jedoch bevorzugt, dass dieser gleichlang ist.

In einer bevorzugten Ausführungsform weisen die Fasern, Borsten und Drähte des Bürstenbesatzes (15) jeweils unabhängig voneinander einen Durchmesser von 0,2 mm bis 3 mm, eine (Besatz-)Länge von 0,25 mm bis 75 mm und eine Besatzdichte von 5 / cm² bis 1000 / cm² eingesetzt. Besonders bevorzugt liegt die Besatzdichte bei mindestens 10 / cm².

Die Fasern, Borsten und Drähte sind vorzugsweise senkrecht zur Rotationsachse des Zylinders aufgebracht. Bevorzugt stehen die Fasern, Borsten und Drähte senkrecht auf der Manteloberfläche des Zylinders.

In Fig. 5 ist eine weitere erfindungsgemäße Ausführung der Vorrichtung dargestellt. Die Aufbringvorrichtung (7") ist auch hier in Form eines Metallzylinders ausgeführt, der beim Pulverauftrag entgegen der Auftragsrichtung rotiert. An dem Metallzylinder anhaftendes Pulver (17) wird mittels eines Abstreifers (16) von der Mantelfläche des Zylinders entfernt, insbesondere derart, dass das Pulver aufgelockert vor den Zylinder fällt (18). Der Abstreifer ist vorzugsweise rotationssymmetisch zum Zylinder ausgerichtet. Der Abstreifer kann bürstenförmig oder auch als dünnes Blech ausgeführt werden, wobei sich als Material für den Abstreifer Metalle anbieten, die eine geringere Härte aufweisen als das Metall des Zylinders. Für den Abstreifer sind aber auch andere Materialien denkbar, sofern diese eine entsprechende Temperaturfestigkeit haben.

Erfindungsgemäß kann der Abstreifer (16) mit einer Aufbringvorrichtung (7) oder einer Aufbringvorrichtung (7') kombiniert werden.

Ebenfalls Gegenstand der vorliegenden Erfindung ist ein Verfahren zur schichtweisen Herstellung von dreidimensionalen Objekten, wobei das Verfahren in der erfindungsgemäßen Vorrichtungen durchgeführt wird.

Grundsätzlich eignen sich alle dem Fachmann bekannten Polymerpulver für den Einsatz in der erfindungsgemäßen Vorrichtung bzw. des erfindungsgemäßen Verfahrens. Geeignet sind insbesondere Thermoplaste und Thermoelaste wie beispielsweise Polyethylen (PE, HDPE, LDPE), Polypropylen (PP), Polyamide, Polyester, Polyesterester, Polyetherester, Polyphenylenether, Polyacetale, Polyalkylenterephthalate, insbesondere Polyethylenterephthalat (PET) und Polybutylenterephthalat (PBT), Polymethylmethacrylat (PMMA), Polyvinylacetal, Polyvinylchlorid (PVC), Polyphenylenoxid (PPO), Polyoxymethylen (POM), Polystyrol (PS), Acrylnitril-Butadien-Styrol (ABS), Polycarbonate (PC), Polyethersulfone, thermoplastische Polyurethane (TPU), Polyaryletherketone, insbesondere Polyetheretherketon (PEEK), Polyetherketonketon (PEKK), Polyetherketon (PEK), Polyetheretherketonketon (PEEKK), Polyaryletheretheretherketon (PEEEK) oder Polyetherketonetherketonketon (PEKEKK), Polyetherimide (PEI), Polyarylensulfide, insbesondere Polyphenylensulfid (PPS), thermoplastische Polyimide (PI), Polyamidimide (PAI), Polyvinylidenfluoride, sowie Copolymere dieser Thermoplaste wie z.B. ein Polyaryletherketon (PAEK) /Polyarylethersulfon (PAES)-Copolymer, Mischungen und/oder Polymerblends. Besonders bevorzugt umfasst das Polymerpulver mindestens ein Polyamid wie PA6, PA66, PA610, PA613, PA1010, PA106, PA11, PA12, PA1012, pA1013 oder Mischungen daraus oder Polyetherketone, vorzugsweise PEEK. Ganz besonders bevorzugt sind Polyamide, insbesondere Polyamid 12, Polyamid 6 oder Polyamid 6.6.

Darüber hinaus sind metallische Pulver, die beispielsweise Eisen, Titan oder Aluminium enthalten oder daraus bestehen, oder keramische Pulver geeignet. Vorzugsweise werden Polymerpulver eingesetzt.

Im Betrieb werden zunächst in der Regel in einem Rechner aufgrund eines Konstruktionsprogramms oder dergleichen Daten über die Form des herzustellenden Objekts (5) erstellt bzw. abgespeichert. Diese Daten werden für die Herstellung des Objekts so aufbereitet, dass das Objekt in eine Vielzahl von horizontalen, im Vergleich zur Objektdimension dünnen Schichten zerlegt wird, und die Formdaten beispielsweise in Form von Datensätzen, z. B. CAD-Daten, für jede dieser Vielzahl von Schichten bereitgestellt werden. Die Erstellung und Aufbereitung der Daten für jede Schicht kann dabei vor der Herstellung oder auch gleichzeitig mit der Herstellung jeder Schicht erfolgen.

Anschließend wird zunächst die Bauplattform (6) mittels der Höheneinstellvorrichtung in die höchste Stellung gefahren, in der die Oberfläche der Bauplattform (6) in einer Ebene mit der Oberfläche des Bauraumes liegt, und anschließend um den Betrag der vorgesehenen Schichtdicke der ersten Materialschicht abgesenkt, sodass innerhalb des entstehenden Ausschnitts ein abgesenkter Bereich gebildet ist, der seitlich von den Wänden des Ausschnitts und unten von der Oberfläche der Bauplattform (6) begrenzt ist. Mittels der Aufbringvorrichtung (7) bzw. der Aufbringvorrichtung (7') in Form eines rotierenden Zylinders wird sodann eine erste Schicht des zu verfestigenden Materials mit der vorgesehenen Schichtdicke in den vom Ausschnitt und der Bauplattform (6) gebildeten Hohlraum bzw. den abgesenkten Bereich eingebracht und gegebenenfalls von einer Heizung auf eine geeignete Arbeitstemperatur, beispielsweise 100 °C bis 360 °C, vorzugsweise 120 °C bis 200 °C, erwärmt. Daraufhin steuert die Steuereinheit (3) die Ablenkeinrichtung derart, dass der abgelenkte Lichtstrahl (2) nacheinander an allen Stellen der Schicht auftrifft und dort das Material sintert bzw. aufschmilzt. Auf diese Weise kann zunächst eine feste Bodenschicht gebildet werden. In einem zweiten Schritt wird die Bauplattform (6) mittels der Höheneinstellvorrichtung um den Betrag einer Schichtdicke abgesenkt und mittels der Aufbringvorrichtung (7) bzw. (7') in den damit entstehenden abgesenkten Bereich innerhalb des Ausschnittes eine zweite Materialschicht eingebracht, ggf. wiederum von der Heizung erwärmt.

In einer Ausführungsform kann die Ablenkeinrichtung diesmal von der Steuereinheit (3) derart gesteuert werden, dass der abgelenkte Lichtstrahl (2) nur auf dem an die Innenfläche des Ausschnittes angrenzenden Bereich der Materialschicht auftrifft und dort die Materialschicht durch Sintern verfestigt, wodurch eine erste ringförmige Wandschicht mit einer Wandstärke von etwa 2 bis 10 mm entsteht, die das verbleibende pulverförmige Material der Schicht vollständig umgibt. Dieser Teil der Steuerung stellt damit eine Einrichtung zum Erzeugen einer das zu bildende Objekt (5) umgebenden Behälterwand gleichzeitig mit der Bildung des Objekts in jeder Schicht dar.

Nach Absenken der Bauplattform (6) um den Betrag der Schichtdicke der nächsten Schicht, Aufbringen des Materials und Aufheizen in der gleichen Weise wie oben kann nun die Herstellung des Objekts (5) selbst beginnen. Hierzu steuert die Steuereinheit (3) die Ablenkeinrichtung derart, dass der abgelenkte Lichtstrahl (2) an solchen Stellen der Schicht auftrifft, die entsprechend den in der Steuereinheit gespeicherten Koordinaten des herzustellenden Objekts (5) verfestigt werden sollen. Bei den weiteren Schichten wird analog vorgegangen. Im Falle der gewünschten Herstellung eines ringförmigen Wandbereichs in Form einer Behälterwand, die das Objekt zusammen mit dem verbleibenden, nicht gesinterten Material umschließt und so beim Absenken der Bauplattform (6) unter den Arbeitstisch ein Austreten des Materials verhindert, wird bei jeder Objektschicht mittels der Einrichtung eine ringförmige Wandschicht auf die darunterliegende ringförmige Wandschicht aufgesintert. Auf die Erstellung der Wand kann verzichtet werden, wenn ein Wechselbehälter entsprechend EP 1037739 oder ein fest eingebauter Behälter verwendet wird.

Nach Abkühlung kann das gebildete Objekt aus der Vorrichtung entnommen werden.

### Beispiele:

Die Beispiele werden, wenn nicht anders angegeben, der folgenden Beschreibung entsprechend bearbeitet. Die Baukammer wird innerhalb von 120 min auf die Prozesstemperatur aufgeheizt. Die Verteilung der Temperatur im Bauraum ist nicht immer homogen, daher wird die mittels Pyrometer gemessene Temperatur als Bauraum-/Prozesstemperatur definiert. Vor der ersten Belichtung werden 40 Schichten Pulver aufgetragen. Aus einem Laser (1) wird der Laserstrahl (2) mittels eines Scansystems (3) durch die Linse (8) auf die temperierte und inertisierte (N₂) Baufeldebene (4) gelenkt. Die Linse wird als F-Theta Linsensystem ausgeführt, um einen möglichst homogenen Fokus über der gesamten Baufeldebene zu gewährleisten.

Das zu belichtende Bauteil wird zentral im Baufeld positioniert. Eine quadratische Fläche mit einer Kantenlänge von 50 mm wird mittels des Lasers aufgeschmolzen. Danach wird die Bauplattform (6) um 0,1 mm abgesenkt und mittels einer Aufbringvorrichtung (7) oder (7') eine Schicht Pulver mit einer Geschwindigkeit von 250 mm/s aufgetragen. Diese Schritte werden wiederholt bis ein 50 mm hohes dreidimensionales Bauteil (5) entsteht. Nach Abschluss der Belichtung werden noch 40 weitere Schichten aufgetragen, bevor die Heizelemente ausgeschaltet und die Abkühlphase eingeleitet wird. Die Zeit, die jeweils für eine Schicht benötigt wird, liegt während des gesamten Bauprozesses unter 40 s.

Nach einer Abkühlzeit von mindestens 12 Stunden wird das Bauteil entnommen und vom anhaftenden Pulver befreit.

### Beispiel 1 (nicht erfindungsgemäß):

Der Bauprozess wird auf einer SPro60 HDHS der Firma 3d-systems, USA, durchgeführt. Verarbeitet wird ein PA12-Pulver mit den Pulverkennwerten aus Tabelle 1. Das Pulver wird mit der Vorrichtung der SPro60 HDHS aufgetragen. Die Rauheit Rz nach DIN EN ISO 4287:1998 der Mantelfläche des Zylinders beträgt 64 µm aus Stahl C60. Die Prozesstemperatur beträgt 169 °C. Die Temperatur im Pulvervorrat beträgt jeweils 129 °C. Die Belichtungsparameter sind: Laserleistung 54,0 W, Scangeschwindigkeit 12000 mm/s, Abstand Belichtungslinien 0,3 mm. Die Qualität der aufgetragenen Pulverschichten ist schlecht. Pulver bleibt an der Mantelfläche des Zylinders haften. Es sind Riefen im Baufeld zu erkennen. An manchen Stellen der Baufeldebene wird kein oder zu wenig Pulver aufgetragen. Das hergestellte dreidimensionale Objekt weist starke Oberflächendefekte auf.

### Beispiel 2 (erfindungsgemäß)

Der Versuch wird im Bauraum einer SPro60 HDHS der Firma 3d-systems durchgeführt. Verarbeitet wird ein PA12-Pulver mit den Pulverkennwerten aus Tabelle 1. Die Prozesstemperatur beträgt 169 °C. Die Temperatur im Pulvervorrat beträgt jeweils 129 °C. Die Belichtungsparameter sind: Laserleistung 54,0 W, Scangeschwindigkeit 12000 mm/s, Abstand Belichtungslinien 0,3 mm. Das Pulver wird mit einem Metallzylinder (7) aufgetragen, dessen Mantelfläche (Stahl C60) ein Rz nach DIN EN ISO 4287:1998 von 183 µm aufweist. Das Pulver lässt sich problemlos auftragen. Nur eine geringe Menge an Pulver bleibt an der Mantelfläche des Zylinders haften. Die Baufeldebene wird vollständig beschichtet. Das hergestellte dreidimensionale Objekt weist keine Oberflächendefekte auf.

### Beispiel 3 (erfindungsgemäß)

Der Versuch wird im Bauraum einer SPro60 HDHS der Firma 3d-systems durchgeführt. Verarbeitet wird ein PA12-Pulver mit den Pulverkennwerten aus Tabelle 1. Die Prozesstemperatur beträgt 169 °C. Die Temperatur im Pulvervorrat beträgt jeweils 129 °C. Die Belichtungsparameter sind: Laserleistung 54,0 W, Scangeschwindigkeit 12000 mm/s, Abstand Belichtungslinien 0,3 mm. Das Pulver wird mit einem Metallzylinder (7') aufgetragen, der mit Drahtborsten (Metalldraht) aus Messing (Durchmesser 1 mm, Länge 10 mm, 60 Drähte / cm²) besetzt ist. Das Pulver lässt sich problemlos auftragen. Die Baufeldebene wird vollständig beschichtet. Das hergestellte dreidimensionale Objekt weist keine Oberflächendefekte auf.

### Beispiel 4 (erfindungsgemäß)

Der Versuch wird im Bauraum einer SPro60 HDHS der Firma 3d-systems durchgeführt. Verarbeitet wird ein PA12-Pulver mit den Pulverkennwerten aus Tabelle 1. Die Prozesstemperatur beträgt 169 °C. Die Temperatur im Pulvervorrat beträgt jeweils 129 °C. Die Belichtungsparameter sind: Laserleistung 54,0 W, Scangeschwindigkeit 12000 mm/s, Abstand Belichtungslinien 0,3 mm. Das Pulver wird mit einem Metallzylinder (7) aufgetragen, dessen Mantelfläche (Stahl C60) ein Rz nach DIN EN ISO 4287:1998 von 104 µm aufweist. Der Abstreifer (7") ist auf Höhe der Rotationsachse des Metallzylinders und parallel zur Baufeldebene montiert. Eine geringe Menge Pulver bleibt an der Mantelfläche des Zylinders haften, wird jedoch durch den Abstreifer wieder von der Mantelfläche entfernt und vor den Metallzylinder gestreut. Das Pulver lässt sich problemlos auftragen. Die Baufeldebene wird vollständig beschichtet. Das hergestellte dreidimensionale Objekt weist keine Oberflächendefekte auf.

**Tabelle 1: Pulverkennwerte**

| | **Wert** | **Einheit** | **Prüfart/Prüfgerät/Prüfparameter** |
|---|---|---|---|
| Polymer | Polyamid 12 | | |
| Schüttdichte | 0,355 | g/cm³ | DIN EN ISO 60 |
| Korngröße d50 | 18 | µm | Malvern Mastersizer 2000, Trockenmessung, 20-40g Pulver mittels Scirocco Trockendispergiergerät zudosiert. Zuführrate Rüttelrinne 70%, Dispergierluftdruck 3 bar. Die Messzeit der Probe 5 Sekunden (5000 Einzelmessungen), Brechungsindex und Blaulichtwert mit 1,52 festgelegt. Auswertung über Mie-Theorie |
| Korngröße d10 | 11 | µm | Malvern Mastersizer 2000, Parameter siehe Korngröße d50 |
| Korngröße d90 | 38 | µm | Malvern Mastersizer 2000, Parameter siehe Korngröße d50 |
| <10,48µm | 9 | % | Malvern Mastersizer 2000, Parameter siehe Korngröße d50 |
| Fließfähigkeit | Fließt nicht unter den Prüfbedingungen | s | DIN EN ISO 6186, Verfahren A, Durchmesser Düsenauslauf 15mm |
| Lösungsviskosität | 1,53 | - | ISO 307, Schott AVS Pro, Lösemittel m-Kresol sauer, Volumetrisches Verfahren, Doppelbestimmung, Lösetemperatur 100°C, Lösezeit 2h, Polymerkonzentration 5g/l Messtemperatur 25°C |
| BET (spez. Oberfläche) | 10,2 | m²/g | ISO 9277, Micromeritics TriStar 3000, Gasadsorption von Stickstoff, diskontinuierlichen volumetrischen Verfahren, 7 Messpunkte bei Relativdrücken P/P0 zwischen ca. 0,05 und ca. 0,20, Kalibrierung des Totvolumens mittels He(99,996 %), Probenvorbereitung 1 h bei 23°C + 16 h bei 80°C unter Vakuum, spez. Oberfläche auf die entgaste Probe bezogen, Auswertung erfolgte mittels Mehrpunktbestimmung |
| Schmelzpunkt 1. Aufheizung | 182 | °C | DIN 53765 DSC 7 v. Perkin Elmer Heiz-/Kühlrate 20K/min |
| Rekristallisationstemperatur | 139 | °C | DIN 53765 DSC 7 v. Perkin Elmer Heiz-/Kühlrate 20K/min |
| Materialkonditionierung | Material wird vor Verarbeitung/Analyse 24h bei 23°C und 50% Luftfeuchtigkeit gelagert | | |

## Patentansprüche

1. Vorrichtung zur schichtweisen Herstellung von dreidimensionalen Objekten umfassend einen Bauraum (10) mit einer höheneinstellbaren Bauplattform (6), einer Vorrichtung (7') zum Aufbringen einer Schicht eines durch Einwirkung elektromagnetischer Strahlung verfestigbaren Materials auf die Bauplattform (6), einer Bestrahlungseinrichtung umfassend eine elektromagnetische Strahlung emittierende Strahlungsquelle (1), eine Steuerungseinheit (3) und eine im Strahlengang der elektromagnetischen Strahlung befindliche Linse (8), zum Bestrahlen von dem Objekt (5) entsprechenden Stellen der Schicht, **dadurch gekennzeichnet, dass** die Vorrichtung (7') zum Aufbringen einer Schicht in Form eines rotierenden Zylinders ausgebildet ist, der mit einem Bürstenbesatz (15) versehen ist.

2. Vorrichtung nach Anspruch 1, **dadurch gekennzeichnet, dass** der Bürstenbesatz (15) ausgewählt wird aus der Gruppe bestehend aus Naturfasern, synthetischen Fasern, Kunstborsten und Metalldrähten.

3. Vorrichtung nach Anspruch 2, **dadurch gekennzeichnet, dass** die Fasern, Borsten oder Drähte einen Durchmesser von 0,2 bis 3 mm aufweisen.

4. Vorrichtung nach Anspruch 2 oder 3, **dadurch gekennzeichnet, dass** die Fasern, Borsten oder Drähte eine Länge von 0,25 mm bis 75 mm aufweisen.

5. Vorrichtung nach einem der Ansprüche 2 bis 4, **dadurch gekennzeichnet, dass** die Fasern, Borsten oder Drähte eine Besatzdichte von 5 /cm² bis 1000 / cm² aufweisen.

6. Vorrichtung nach einem der vorherigen Ansprüche, **dadurch gekennzeichnet, dass** die Manteloberfläche ein Metall oder eine Metalllegierung umfasst oder daraus besteht.

7. Vorrichtung nach einem der vorherigen Ansprüche, **dadurch gekennzeichnet, dass** der Zylinder entgegen der Auftragsrichtung rotiert

8. Vorrichtung nach einem der vorherigen Ansprüche, **dadurch gekennzeichnet, dass** weiterhin ein Abstreifer (16) umfasst ist.

9. Verfahren zur schichtweisen Herstellung von dreidimensionalen Objekten, wobei das Verfahren in einer Vorrichtung gemäß einem der Ansprüche 1 bis 8 durchgeführt wird.

10. Verwendung von Polymerpulvern mit einer Rieselzeit von über 35 s oder nicht fließfähigen Pulvern, gemessen bei einem Durchflussdurchmesser von 15 mm nach DIN EN ISO 6186, Verfahren A, für die schichtweise Herstellung von dreidimensionalen Objekten nach einem Verfahren des Anspruchs 9.

11. Verwendung von Polymerpulvern mit einer Rieselzeit von über 35 s oder nicht fließfähigen Pulvern, gemessen bei einem Durchflussdurchmesser von 15 mm nach DIN EN ISO 6186, Verfahren A, für die schichtweise Herstellung von dreidimensionalen Objekten in einem Verfahren, wobei das Verfahren in einer Vorrichtung umfassend einen Bauraum (10) mit einer höheneinstellbaren Bauplattform (6), einer Vorrichtung (7) zum Aufbringen einer Schicht eines durch Einwirkung elektromagnetischer Strahlung verfestigbaren Materials auf die Bauplattform (6), einer Bestrahlungseinrichtung umfassend eine elektromagnetische Strahlung emittierende Strahlungsquelle (1), eine Steuerungseinheit (3) und eine im Strahlengang der elektromagnetischen Strahlung befindliche Linse (8), zum Bestrahlen von dem Objekt (5) entsprechenden Stellen der Schicht, wobei die Vorrichtung (7) zum Aufbringen einer Schicht in Form eines rotierenden Zylinders ausgebildet ist, dessen Manteloberfläche mindestens eine Rauheit Rz nach DIN EN ISO 4287:1998 von 100 µm hat, durchgeführt wird.

## Claims

1. Apparatus for the layer-by-layer production of three-dimensional objects, comprising a construction chamber (10) with an adjustable-height construction platform (6), with an apparatus (7') for applying, to the construction platform (6), a layer of a material solidifiable by exposure to electromagnetic radiation, and with irradiation equipment comprising a radiation source (1) which emits electromagnetic radiation, a control unit (3) and a lens (8) which is located in the beam path of the electromagnetic radiation, for irradiating points of the layer corresponding to the object (5), **characterized in that** the apparatus (7') for applying a layer is designed in the form of a rotating cylinder which is provided with a brush trim (15).

2. Apparatus according to Claim 1, **characterized in that** the brush trim (15) is selected from the group consisting of natural fibres, synthetic fibres, artificial bristles and metal wires.

3. Apparatus according to Claim 2, **characterized in that** the fibres, bristles or wires have a diameter of 0.2 to 3 mm.

4. Apparatus according to Claim 2 or 3, **characterized in that** the fibres, bristles or wires have a length of 0.25 mm to 75 mm.

5. Apparatus according to any of Claims 2 to 4, **characterized in that** the fibres, bristles or wires have a trim density of 5 /cm² to 1000 /cm².

6. Apparatus according to any of the preceding claims, **characterized in that** the outer surface comprises or consists of a metal or a metal alloy.

7. Apparatus according to any of the preceding claims, **characterized in that** the cylinder rotates counter to the direction of application.

8. Apparatus according to any of the preceding claims, **characterized in that** additionally a stripper (16) is included.

9. Process for the layer-by-layer production of three-dimensional objects, the process being carried out in an apparatus according to any of Claims 1 to 8.

10. Use of polymer powders having a flow time of more than 35 s or of non-flowable powders, measured with a flow diameter of 15 mm in accordance with DIN EN ISO 6186, method A, for the layer-by-layer production of three-dimensional objects by a process of Claim 9.

11. Use of polymer powders having a flow time of more than 35 s or of non-flowable powders, measured with a flow diameter of 15 mm in accordance with DIN EN ISO 6186, method A, for the layer-by-layer production of three-dimensional objects in a process, the process being carried out in an apparatus comprising a construction chamber (10) with an adjustable-height construction platform (6), with an apparatus (7) for applying, to the construction platform (6), a layer of a material solidifiable by exposure to electromagnetic radiation, and with irradiation equipment comprising a radiation source (1) which emits electromagnetic radiation, a control unit (3) and a lens (8) which is located in the beam path of the electromagnetic radiation, for irradiating points of the layer corresponding to the object (5), where the apparatus (7) for applying a layer is designed in the form of a rotating cylinder whose outer surface has a roughness Rz according to DIN EN ISO 4287:1998 of at least 100 µm.

## Revendications

1. Dispositif pour la fabrication par couches d'objets tridimensionnels, comprenant un espace de construction (10) présentant une plate-forme de construction (6) réglable en hauteur, un dispositif (7') pour appliquer une couche d'un matériau pouvant être solidifié sous l'effet d'un rayonnement électromagnétique sur la plate-forme de construction (6), un dispositif d'irradiation comprenant une source de rayonnement (1) émettant un rayonnement électromagnétique, une unité de commande (3) et une lentille (8) se trouvant dans le trajet du rayonnement électromagnétique, pour irradier des sites de la couche correspondant à l'objet (5), **caractérisé en ce que** le dispositif (7') pour appliquer une couche est conçu sous forme d'un cylindre rotatif pourvu d'un garnissage à brosse (15).

2. Dispositif selon la revendication 1, **caractérisé en ce que** le garnissage à brosse (15) est choisi dans le groupe constitué par les fibres naturelles, les fibres synthétiques, les soies synthétiques et les fils métalliques.

3. Dispositif selon la revendication 2, **caractérisé en ce que** les fibres, les soies ou les fils présentent un diamètre de 0,2 à 3 mm.

4. Dispositif selon la revendication 2 ou 3, **caractérisé en ce que** les fibres, les soies ou les fils présentent une longueur de 0,25 à 75 mm.

5. Dispositif selon l'une quelconque des revendications 2 à 4, **caractérisé en ce que** les fibres, les soies ou les fils présentent une densité sur la garniture de 5/cm² à 1000/cm².

6. Dispositif selon l'une quelconque des revendications précédentes, **caractérisé en ce que** la surface enveloppante comprend un métal ou un alliage de métal ou est constituée par ceux-ci.

7. Dispositif selon l'une quelconque des revendications précédentes, **caractérisé en ce que** le cylindre tourne contrairement au sens d'application.

8. Dispositif selon l'une quelconque des revendications précédentes, **caractérisé en ce qu'**en outre une racle (16) est comprise.

9. Procédé pour la fabrication par couches d'objets tridimensionnels, le procédé étant réalisé dans un dispositif selon l'une quelconque des revendications 1 à 8.

10. Utilisation de poudres polymères présentant un temps d'écoulement supérieur à 35 secondes ou de poudres qui ne s'écoulent pas, mesurées à un diamètre d'écoulement de 15 mm selon la norme DIN EN ISO 6186, procédé A, pour la fabrication par couches d'objets tridimensionnels selon un procédé de la revendication 9.

11. Utilisation de poudres polymères présentant un temps d'écoulement supérieur à 35 secondes ou de poudres qui ne s'écoulent pas, mesurées à un diamètre d'écoulement de 15 mm selon la norme DIN EN ISO 6186, procédé A, pour la fabrication par couches d'objets tridimensionnels dans un procédé, le procédé étant réalisé dans un dispositif comprenant un espace de construction (10) présentant une plate-forme de construction (6) réglable en hauteur, un dispositif (7) pour appliquer une couche d'un matériau pouvant être solidifié sous l'effet d'un rayonnement électromagnétique sur la plate-forme de construction (6), un dispositif d'irradiation comprenant une source de rayonnement (1) émettant un rayonnement électromagnétique, une unité de commande (3) et une lentille (8) se trouvant dans le trajet du rayonnement électromagnétique, pour irradier des sites de la couche correspondant à l'objet (5), le dispositif (7) pour appliquer une couche étant conçu sous forme d'un cylindre rotatif, dont la surface enveloppante présente au moins une rugosité Rz selon la norme DIN EN ISO 4287:1998 de 100 µm.
